(19) Europäisches Patentamt / European Patent Office / Office européen des brevets

(11) **EP 1 410 869 B1**

(12) **EUROPEAN PATENT SPECIFICATION**

(45) Date of publication and mention
of the grant of the patent:
**31.01.2007 Bulletin 2007/05**

(51) Int Cl.:
*B23K 9/20* (2006.01)   *B21D 39/03* (2006.01)
*F16B 5/08* (2006.01)   *B62D 27/02* (2006.01)

(21) Application number: **03022705.2**

(22) Date of filing: **09.10.2003**

(54) **Weld bracket to sheet metal construction and method for coupling a weld bracket to a sheet metal component**

Konstruktion zum Anschweissen eines Halters an Blech und Verfahren zum Verbinden eines Anschweisshalters mit einem Blechteil

Assemblage d'une équerre avec une tôle et procédé d'assemblage d'une équerre avec une tôle

(84) Designated Contracting States:
**AT BE BG CH CY CZ DE DK EE ES FI FR GB GR HU IE IT LI LU MC NL PT RO SE SI SK TR**

(30) Priority: **15.10.2002 US 418463 P**

(43) Date of publication of application:
**21.04.2004 Bulletin 2004/17**

(73) Proprietor: **Newfrey LLC
Newark,
Delaware 19711 (US)**

(72) Inventors:
• **Ramasamy, Sivakumar
Utica
Michigan 48317 (US)**
• **Geno, Matthew M.
Macomb
Michigan 48044 (US)**

(74) Representative: **Haar, Lucas Heinz Jörn et al
Patentanwälte Haar & Schwarz-Haar,
Lessingstrasse 3
61231 Bad Nauheim (DE)**

(56) References cited:
JP-A- 51 057 654    JP-A- 51 077 554
US-A- 3 115 572    US-A- 3 204 083
US-A- 4 188 149    US-A- 5 308 115

• PATENT ABSTRACTS OF JAPAN vol. 1996, no. 05, 31 May 1996 (1996-05-31) & JP 8 019865 A (TOYOTA AUTO BODY CO LTD), 23 January 1996 (1996-01-23)
• "recommended practices for stud welding" RECOMMENDED PRACTICES FOR STUD WELDING, XX, XX, 29 July 1982 (1982-07-29), pages 1-34, XP002085402

**Description**

The present invention relates to a weldable bracket to sheet metal construction according to the preamble of claim 1 and a method of coupling a weld bracket to a sheet metal according to the preamble of claim 11 (see, for example, JP-A-08/019865) and, more particularly, to a construction comprising a thin L-shaped bracket for welding to very thin sheet metal.

Increased fuel economy requirements in the transportation industries are requiring lighter and lighter vehicles. As such, vehicle manufacturers are required to find weight reductions throughout the vehicle. One method of accomplishing such weight reduction is to reduce the thickness of sheet metals used to form the outer skin and interior portions of a vehicle's body.

To couple sheet metal panels to other portions of the vehicle frame, thin flanges are typically welded to the sheet metal panel. Additionally, flanges are welded to sheet metal to function as electrical grounds or mounting locations for vehicle components such as wire harnesses. These weld flanges often are coupled to the sheet metal using weld guns to weld the weld flange perpendicular to the sheet metal. In this regard, the weld flange is typically planar and has a contact surface equal to the width and thickness of the flange.

Often in situations where the sheet metal is thinner than the flange, the base sheet metal is so locally heated by the flange that marking occurs within the base sheet opposite the weld flange. Additionally, when subject to vary high welding currents, a through hole may be produced in the base sheet metal. This is especially true in sheet metal constructions when the sheet metal has a thickness of less than or equal to 1.2 mm. In situations where the electrical current to produce a weld is reduced so as not to cause destruction or marking of the sheet metal, the weld is not of a suitable strength to mount the sheet metal to a vehicle structure.

A method and a device for welding a bracket to a car body is disclosed in JP-A-81 019865 A. The bracket is a band-shaped piece of metal bent into an L-shape and has a body and a flange perpendicular to the body. A central protrusion is formed on the bottom of the flange to generate an arc during the welding process. The bracket is automatically welded by means of a welding gun having an electrode in the shape of an block to which the bracket is directly chucked. After movement of the bracket to the welding position on the car body an arc discharge is generated from the tip of the electrode and the center of the flange is welded to the welding location on the car body. No thickness dimensions of the materials of the bracket and the car body are disclosed.

US-A-4 188 149 discloses a skin weld joint comprising a thin metallic skin welded to an elongated metallic frame member including one flange adjacent the skin, laterally spaced apart ribs projecting from one side of the flange and in contact with the skin, and a pair of flange portions integrally extruded with the ribs. The flange portions laterally project on opposite sides of the flange, have a reduced thickness relative to the flange, for readily deformation under the heat of welding, and are welded to the skin by preferably chain staggered welds.

A method of welding the flange of a profiled metallic bar to the inner side of an externally ribbed metallic wall panel is known from US-A-3 115 572, wherein the inner side of the wall panel is placed against the flange so that the latter is at least partially aligned with at least one rib at the outer side of the panel, and the thickness of the ribs is selected in such a way that they prevent penetration by welds. The flange is spot welded to the panel from the inner side by forming welds in the flange in such a way that roots of the welds extend through the inner side of the panel and into the material of a rib without penetrating the outer side of the panel.

In "Recommended Practices for Stud Welding", 29 July 1982, pages 1-34, XP-002085402 among other stud welding methods including the drawn arc method is disclosed, wherein, in sequence, the stud is positioned against the work, the stud welding gun is actuated energizing the welding circuit, lifting the stud from the work and drawing a low pilot arc. Then the stud is started to return to the work while welding capacitors are discharged across the arc thereby melting the stud and the adjacent work surface, and spring action of the welding gun plunges the stud into the molten metal to complete the weld.

Accordingly, it is an object of the present invention to provide a weld fast bracket to sheet metal construction which overcomes the deficiencies of the prior art.

In accordance with the invention, a weld bracket to sheet metal construction is provided comprising the features disclosed in claim 1. The sheet metal has a first thickness. The depth of a flange is the function of the first thickness. A weldment portion is provided between the flange and the base metal.

In another embodiment of the invention, a method of coupling a bracket to a sheet metal base having a thickness less than 1.2 mm is provided comprising the features disclosed in claim 11. The method includes forming a flange on the bracket. The flange is then positioned so as to contact the sheet metal. Current is applied to the bracket while the bracket is being moved away from the sheet metal so as to form a welding arc. The bracket is then forced into a pool of weldment material.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:

Figure 1 is a side view of the bracket and base material according to the teachings of the present invention;

Figures 2a and 2b represent an alternate embodiment of the invention; and

Figures 3a and 3b represent the brackets shown in Figures 1 and 2 coupled to a sheet metal structure.

The following description of the preferred embodiment(s) is merely exemplary in nature and is in no way intended to limit the invention, its application, or uses.

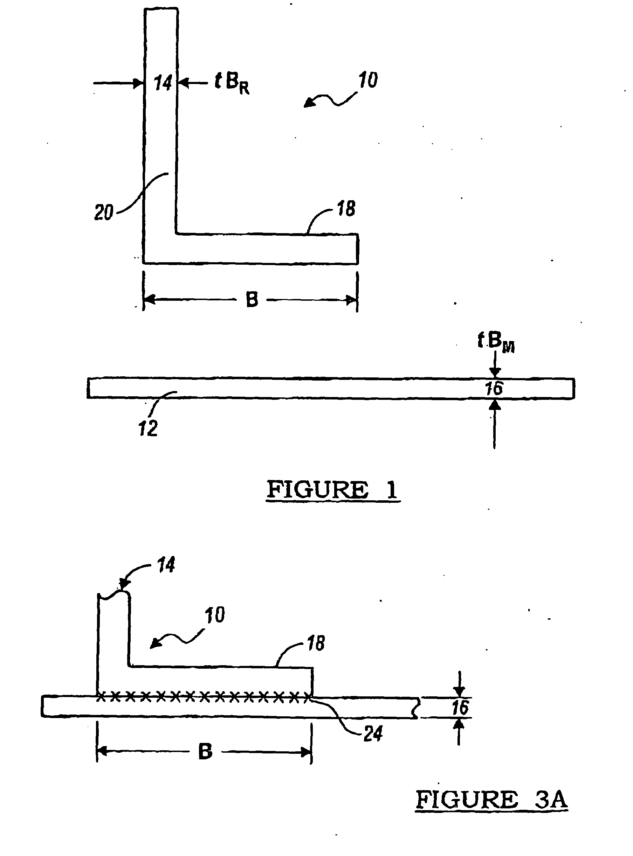

Figure 1 depicts an angular weld bracket 10 which is welded to a base sheet metal component 12. The weld bracket 10 has a thickness 14 of $T_{br}$ while the sheet metal component 12 has a thickness 16 of $T_{bm}$. The bracket 10 has a flange 18 which is general perpendicular to a bracket body 20.

The flange 18 has a depth B and a width C. In circumstances where the thickness 16 of the sheet metal component 12 is greater than the thickness 14 of the bracket 10 or the thickness 16 of the sheet metal component 12 is greater than 1.2 mm, then flange 18 is not needed and the flat bracket body 20 can be welded directly to the base material. The bracket width C is from 1.0 to about 30 mm depending upon the strength needed.

Under circumstances when the thickness 14 of the bracket material is greater than the thickness 16 of the sheet metal component 12 then the depth B of the flange 18 is equal to a multiplication factor (X) times the thickness 16 of the base material. In this regard, the depth B of the flange 18 is a function described below

$t_{BM}$ = Sheet Metal Base Material Thickness

$t_{BR}$ = Bracket Material Thickness

$$t_{BM} < t_{BR} \quad \text{or} \quad t_{BM} < 1.2 \text{ mm}$$

$$B = x t_{BM}$$

$$y \leq x \leq 5$$

$$y = t_{BM} + t_{BR}$$

The lower limit for the multiplication factor (X) is equal to the thickness 14 of the bracket 10 plus the thickness 16 of the sheet metal base material of component 12, while the upper limit for multiplication factor is 5. It has been found that the multiplication of factor of 2 to 3 is preferred. These ratios are best applied to brackets 10 having a thickness 14 of greater than or equal to 0.5 mm up to and including 5 mm. Further, the ratios are most applicable to base materials having a thickness 16 of greater than or equal to 0.5 mm up to and including 1.20 mm.

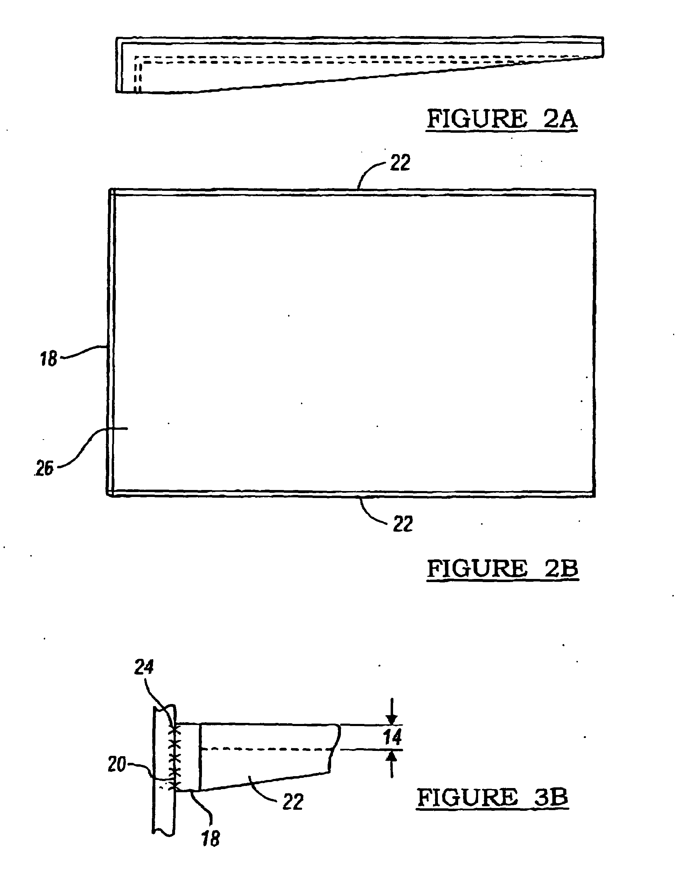

Figures 2a and 2b represent an alternate embodiment of the present invention. As shown, the bracket 26 further has a pair of triangular side support members 22. The bracket 26 has a flange 18 which conforms to the size requirements as described for the embodiment of Figure 1. In using the weldment area of the flange, heating of the base sheet metal is distributed over a greater area as opposed to the prior art. Damage to the surface of the sheet metal is reduced and the strength of the weld to surface interface is improved.

Figure 3a represents a welded construct according to teachings of the first embodiment of the invention. Shown is a weld bracket 10 coupled to the base 12 by a weldment portion 24. As seen, the bracket 10 has a thickness 14 greater than the thickness of the sheet metal 16. It is envisioned that the bracket 10 will be coupled to the sheet metal by the wetting of a majority of the flange 18 with molten metal.

Similarly, Figure 3b represents the weld bracket construct coupled to the sheet metal by the weldment portion 24. The brackets 10, 26 are coupled to the sheet metal using a drawn arc method. In this regard, a flange 18 is positioned against a surface of the sheet metal 12. Welding current is applied to the bracket 10 or 26 and through the sheet metal.

The bracket 10 or 26 is lifted slightly off the surface of the sheet metal 12 forming a welding arc therebetween.

Molten metal is formed between the sheet metal 12 and the flange 18. The bracket 10 or 26 is then plunged into the liquid metal and the welding current is removed, thereby coupling the bracket 10 or 26 to the surface of the sheet metal 12.

The description of the invention is merely exemplary in nature and, thus, variations are intended to be within the scope of the invention. Such variations are not to be regarded as a departure from the scope of the invention. For example, it is envisioned that the base sheet metal can be a laminate construction formed of very thin layers of aluminum or steel separated at least partially by a non-conductive polymer layer.

**Claims**

1. A weld bracket to sheet metal construction comprising:

    a sheet metal base (12) having a first thickness (16);
    a weld bracket (10) having a body portion (20) having a second thickness (14) and a flange portion (18); and
    a weldment portion (24) disposed between said flange portion (18) and the sheet metal base (12), **characterised in that** said second thickness (14) of the body portion (20) is greater than said first thickness (16) of the sheet metal base (12), and said flange portion (18) has a depth (B) being equal to or greater than the first thickness (16) plus the second thickness (14) and less than or equal to 5 times the first thickness (16).

2. The construction according to Claim 1 wherein the first thickness (16) is less than 1.2 mm.

3. The construction according to Claim 1 wherein the weld bracket has a width (C) between about 1 mm and about 30 mm.

4. The construction according to Claim 1 wherein said depth (B) is greater than said first thickness (16) plus said second thickness (14) times said first thickness (16).

5. The construction according to Claim 1 wherein said depth (B) is a multiple of said first thickness (16), wherein said multiple is equal to or greater than said first thickness (16) plus said second thickness (14) and less than or equal to 5.

6. The construction according to Claim 5, wherein the multiple is between 2 and 3.

7. The construction according to Claim 1 wherein the flange portion (18) is coupled perpendicular to the body portion.

8. The construction according to Claim 1 wherein the weld bracket (26) comprises a pair of side triangular support members (22).

9. The construction according to Claim 1 wherein the second thickness (14) is between 0.5 mm and 5 mm.

10. The construction according to Claim 1 wherein the first thickness (16) is between 0.5 mm and 1.2 mm.

11. A method of coupling a weld bracket (10) to a sheet metal component (12) having a first thickness (16) less than 1.2 mm comprising:

    providing a sheet metal component (12) having a first thickness (16) less than 1.2 mm
    providing a weld bracket (10) of a material having a second thickness (14)
    forming a flange portion (18) on said weld bracket (10);
    coupling said flange portion (18) to said shut metal component (12);
    applying electric current to the flange portion (18);
    lifting the weld bracket (10) so as to cause an arc between the flange portion (18) and the sheet metal component (12), wherein liquid weldment material is produced;
    forcing the weld bracket (10) into the liquid weldment area; and
    removing the electric current ;

    **characterized in that** the second thickness (14) is greater than the first thickness (16) said forming a flange portion is forming a flange portion (18) having a depth (B) being equal to or greater than the first thickness (16) of the sheet metal component (12) plus the second thickness (14) of the weld bracket material (10) and less than or equal to 5 times the first thickness (16).

12. The method according to Claim 11, wherein a flange portion (18) is formed having a depth (B) of greater than the first thickness (16) of the sheet metal component (12) plus the second thickness (14) of the weld bracket material times the first thickness (16).

13. The method according to Claim 11, wherein the weld bracket (10) has a width (C) between 1 and 30 mm.

**Patentansprüche**

1. Konstruktion zum Anschweißen eines Halters an Blech umfassend:

    eine Blechbasis (12) mit einer ersten Dicke (16);
    einen Anschweißhalter (10) mit einem Körperabschnitt (20) mit einer zweiten Dicke (14) und einem Flanschabschnitt (18); und
    einen Schweißnahtabschnitt (24), der zwischen dem Flanschabschnitt (18) und der Blechbasis (12) angeordnet ist, **dadurch gekennzeichnet, dass** die zweite Dicke (14) des Körperabschnitts (20) größer ist als die erste Dicke (16) der Blechbasis (12) und dass der Flanschabschnitt (18) eine Tiefe (B) hat, die gleich oder größer ist als die erste Dicke (16) plus die zweite Dicke (14) und kleiner oder gleich fünfmal der ersten Dicke (16).

2. Konstruktion nach Anspruch 1, wobei die erste Dicke (16) kleiner ist als 1,2 mm.

3. Konstruktion nach Anspruch 1, wobei der Anschweißhalter eine Breite (C) zwischen etwa 1 mm und etwa 30 mm hat.

4. Konstruktion nach Anspruch 1, wobei die Tiefe (B) größer ist als die erste Dicke (16) plus die zweite Dicke (14) mal der ersten Dicke (16).

5. Konstruktion nach Anspruch 1, wobei die Tiefe (B) ein Vielfaches der ersten Dicke (16) ist, wobei das Vielfache gleich oder größer ist als die erste Dicke (16) plus die zweite Dicke (14) und kleiner oder gleich 5.

6. Konstruktion nach Anspruch 5, wobei das Vielfache zwischen 2 und 3 ist.

7. Konstruktion nach Anspruch 1, wobei der Flanschabschnitt (18) senkrecht mit dem Körperabschnitt verbunden ist.

8. Konstruktion nach Anspruch 1, wobei der Anschweißhalter (26) ein Paar seitliche dreieckige Tragglieder (22) umfasst.

9. Konstruktion nach Anspruch 1, wobei die zweite Dicke (14) zwischen 0,5 mm und 5 mm ist.

10. Konstruktion nach Anspruch 1, wobei die erste Dicke (16) zwischen 0,5 mm und 1,2 mm ist.

11. Verfahren zum Verbinden eines Anschweißhalters (10) mit einem Blechteil (12) mit einer ersten Dicke (16), die kleiner ist als 1,2 mm, umfassend:

    Bereitstellen eines Blechteils (12) mit einer ersten Dicke (16), die kleiner ist als 1,2 mm;
    Bereitstellen eines Anschweißhalters (10) aus einem Material mit einer zweiten Dicke (14);
    Bilden eines Flanschabschnitts (18) an dem Anschweißhalter (10);
    Verbinden des Flanschabschnitts (18) mit dem Blechteil (12);
    Anlegen von elektrischem Strom an den Flanschabschnitt (18);
    Anheben der Anschweißhalter (10), um einen Lichtbogen zwischen dem Flanschabschnitt (18) und dem Blechteil (12) zu bilden, wobei flüssiges Schweißnahtmaterial erzeugt wird;
    Zwängen der Anschweißhalter (10) in den flüssigen Schweißnahtbereich; und
    Entfernen des elektrischen Stroms;

    **dadurch gekennzeichnet, dass** die zweite Dicke (14) größer ist als die erste Dicke (16) und dass das Bilden eines Flanschabschnitts das Bilden eines Flanschabschnitts (18) mit einer Tiefe (B) ist, die gleich oder größer ist als die erste Dicke (16) des Blechteils (12) plus der zweiten Dicke (14) des Anschweißhaltermaterials (10) und kleiner oder gleich fünfmal der ersten Dicke (16).

**12.** Verfahren nach Anspruch 11, wobei ein Flanschabschnitt (18) gebildet wird mit einer Tiefe (B), die größer ist als die erste Dicke (16) des Blechteil (12) plus der zweiten Dicke (14) des Anschweißhaltermaterials mal der ersten Dicke (16).

**13.** Verfahren nach Anspruch 11, wobei der Anschweißhalter (10) eine Breite (C) zwischen 1 und 30 mm hat.

**Revendications**

**1.** Structure de console à souder sur feuille métallique, comprenant :

- une base métallique de type feuille (12) possédant une première épaisseur (16) ;
- une console à souder (10) possédant une partie corps (20) d'une seconde épaisseur (14), et une partie aile (18) ; et
- une partie de soudage (24) disposée entre ladite partie aile (18) et ladite base métallique de type feuille (12) ;

**caractérisée en ce que** ladite seconde épaisseur (14) de la partie corps (20) est supérieure à ladite première épaisseur (16) de la base métallique de type feuille (12), et **en ce que** ladite partie aile (18) a une profondeur (B) supérieure ou égale à ladite première épaisseur (16) plus la seconde épaisseur (14) et inférieure ou égale à cinq fois la première épaisseur (16).

**2.** Structure selon la revendication 1, dans laquelle la première épaisseur (16) est inférieure à 1,2 mm.

**3.** Structure selon la revendication 1, dans laquelle la console à souder possède une largeur (C) allant d'environ 1 mm à environ 30 mm.

**4.** Structure selon la revendication 1, dans laquelle ladite profondeur (B) est supérieure à ladite première épaisseur (16) plus ladite seconde épaisseur (14) fois ladite première épaisseur (16).

**5.** Structure selon la revendication 1, dans laquelle ladite profondeur (B) est un multiple de ladite première épaisseur (16), lequel multiple est supérieur ou égal à ladite première épaisseur (16) plus ladite seconde épaisseur (14) et est inférieur ou égal à 5.

**6.** Structure selon la revendication 5, dans laquelle le multiple varie entre 2 et 3.

**7.** Structure selon la revendication 1, dans laquelle la partie aile (18) est couplée perpendiculairement à la partie corps.

**8.** Structure selon la revendication 1, dans laquelle la console à souder (26) comprend une paire d'éléments de support triangulaires latéraux (22).

**9.** Structure selon la revendication 1, dans laquelle la seconde épaisseur (14) varie entre 0,5 et 5 mm.

**10.** Structure selon la revendication 1, dans laquelle la première épaisseur (16) varie entre 0,5 et 1,2 mm.

**11.** Procédé de couplage d'une console à souder (10) à un composant de type feuille métallique (12) ayant une première épaisseur (16) inférieure à 1,2 mm, comprenant les étapes consistant à :

- utiliser un composant de type feuille métallique (12) ayant une première épaisseur (16) inférieure à 16 mm ;
- utiliser une console à souder (10) faite d'un matériau ayant une seconde épaisseur (14) ;
- former une partie aile (18) sur ladite console à souder (10) ;
- coupler ladite partie flanc (18) au dit composant de type feuille métallique (12) ;
- appliquer un courant électrique à ladite partie aile (18) ;
- soulever la console à souder (10) de manière à créer un arc entre la partie flanc (18) et le composant de type feuille métallique (12), produisant ainsi un matériau de soudure liquide ;
- pousser la console à souder (10) dans la zone de soudure liquide ; et

- interrompre le courant électrique ;

**caractérisé en ce que** la seconde épaisseur (14) est supérieure à la première épaisseur (16), et **en ce que** la formation de la partie aile consiste à former une partie flanc (18) qui a une profondeur (B) supérieure ou égale à la première épaisseur (16) dudit composant de type feuille métallique (12) plus la seconde épaisseur (14) du matériau de la console à souder (10), et qui est inférieure ou égale à cinq fois la première épaisseur (16).

12. Procédé selon la revendication 11, dans lequel une partie aile (18) est formée de manière à avoir une profondeur (B) supérieure à la première épaisseur (16) du composant de type feuille métallique (12) plus la seconde épaisseur (14) du matériau de la console à souder fois la première épaisseur (16).

13. Procédé selon la revendication 11, dans lequel la console à souder (10) possède une largeur (C) se situant entre 1 et 30 mm.

**FIGURE 1**

**FIGURE 3A**

**FIGURE 2A**

**FIGURE 2B**

**FIGURE 3B**